(19) Europäisches Patentamt
European Patent Office
Office européen des brevets

(11) Publication number: 0 123 529
B1

(12) EUROPEAN PATENT SPECIFICATION

(45) Date of publication of patent specification: 30.11.88

(51) Int. Cl.$^4$: C 01 G 49/00, C 04 B 35/26, D 01 F 9/08, H 01 F 1/34

(21) Application number: 84302691.5

(22) Date of filing: 19.04.84

(54) **Ferrimagnetic spinel fibres.**

(30) Priority: 21.04.83 US 487400

(43) Date of publication of application:
31.10.84 Bulletin 84/44

(45) Publication of the grant of the patent:
30.11.88 Bulletin 88/48

(84) Designated Contracting States:
DE FR GB

(58) References cited:
US-A-3 760 049
US-A-3 822 210
US-A-4 097 392
US-A-4 104 395

(73) Proprietor: CELANESE CORPORATION
1211 Avenue of the Americas
New York New York 10036 (US)

(72) Inventor: David, Lawrence D.
61 So. Rensen Avenue
Wappingers Falls New York (US)
Inventor: Arons, Richard M.
126 Hillside Avenue
Chatham New Jersey (US)

(74) Representative: De Minvielle-Devaux, Ian
Benedict Peter et al
CARPMAELS & RANSFORD 43, Bloomsbury
Square
London WC1A 2RA (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 123 529 B1

**Description**

The invention relates to the production of certain ferrimagnetic spinel fibres, and to certain fibres which may be produced by this method.

In recent years inorganic fibres have received increasing attention. Such interest may be traced at least in part to new demands of industry for fibres capable of withstanding elevated temperatures without deleterious effects. The growing aerospace industry provides many applications for light and strong heat-resistant fibrous materials. Inorganic refractory fibres commonly available today in commercial quantities include graphite, alumina-silica and silicon carbide fibres.

The formation of inorganic refractory fibres has required elaborate and time-consuming procedures since such compounds possess high melting points which render melt-spinning either impossible or extremely difficult. Procedures for the thermal formation of fibrous graphite have been proposed in which continuous cellulosic fibers or woven textile articles formed therefrom serve as the starting material. Also, generally infusible synthetic polymeric fibres, such as those formed from acrylonitrile or copolymers thereof, have served as starting materials in processes proposed for the production of fibrous graphite.

United States Patents 3,270,109 and 3,271,173 disclose processes for the production of inorganic oxide monofilaments in which a precursor fibre composed of certain inorganic or metallorganic salts is formed and then heated to convert it to the desired inorganic filament. Additionally, inorganic fibres such as those formed from boron or boron carbide have been prepared by the vapour deposition thereof upon a substrate, such as fine tungsten wire.

Other United States Patents which specifically relate to production of inorganic fibres include 3,107,152; 3,116,975; 3,179,605; 3,270,109; 3,271,173; 3,285,696; 3,311,689; 3,385,915; 3,529,044; 3,760,049; 4,008,299 and 4,126,652.

Inorganic fibres are also finding new applications in the growing electronics industry. There is interest in ceramic fibres which exhibit magnetic anisotropy and high electrical resistivity.

U.S. Patent 2,968,622 describes a process for the preparation of magnetic ceramic fibres which involves attenuation of a molten magnetic material into a fine filament having a mechanically oriented atomic distribution, and followed by rapid chilling thereof to freeze the oriented atomic distribution.

Magnetic ceramic fibres have a wide range of adaptability for prospective applications such as the production of transformers, inductors, switching elements, memory devices, recording heads, tapes and electromagnetic interaction shields.

There remains a need for new and improved processes for the production of inorganic fibres. There is further need for novel ceramic fibres which can meet high performance specifications under exceptional operating conditions.

This invention provides an improved process for the production of inorganic fibres.

It provides a process for the production of ferrimagnetic spinel fibres.

In this way it provides novel ferrimagnetic spinel fibres.

The numerous advantages of the present invention will become apparent from the present description and the example.

The present invention provides a process for the production of ferrimagnetic spinel fibres which comprises (1) forming an aqueous solution containing metal salt compounds in quantities and with metal valences that correspond to a spinel product corresponding to the formula:

$$M_1Fe_2O_4$$

where M is a divalent metal ion (such as manganese, iron, cobalt, nickel, copper, zinc, cadmium, magnesium, barium, strontium or any combination thereof); (2) contacting the aqueous solution with organic polymer fibres that swell and are imbibed with the metal salt; (3) contacting the imbibed fibres with an alkaline aqueous solution to precipitate the metal salt content of the fibres in the form of metal hydroxides; and (4) pyrolysing the fibres at a temperature of 500°—2500°C. in the presence of molecular oxygen to form ferrimagnetic $M_1Fe_2O_4$ spinel fibres.

The divalent metal (M) compounds preferably are in the form of mineral acid salts such as chlorides, bromides, sulfates, nitrates and phosphates. The solubility of the metal salt compounds is increased if the aqueous solution in step (1) has a pH in the acidic range; this may be achieved by the addition of a mineral acid.

The concentration of the metal salt cations in the aqueous solution of step (1) can generally vary in the range 2—30 weight percent, based on total solution weight. The maximum concentration achievable depends on factors such as the solubility of the respective metal salt compounds, the temperature, the pH of the solution and the like.

Among the preferred mixtures of metal salt compounds is a combination of nickel, zinc and iron compounds, which subsequently will provide a ferrimagnetic spinel $M_1Fe_2O_4$ product in which the gram-atom ratio of nickel/zinc/iron is about 0.7:0.3:2.

In step (2) of the process, organic polymer fibres are contacted with the aqueous solution formed in step (1), e.g., by submersion of the fibres in the aqueous solution. Once contact has been established, the fibres swell in size by absorption of the water and its metal salt solute.

It is essential that a sufficient content of metal salt compounds is imbibed in the swollen fibres, in order to provide adequate strength in the final ferrimagnetic spinel fibre product. The content of the metal salts in the imbibed fibres should be at

least 0.1 gram per gram of organic polymer, and preferably the content is in the range 0.2—2 grams of metal salts per gram of organic polymer.

Optionally, the fibre can be pre-swelled with water and/or a water-soluble organic solvent prior to the immersion in the imbibing aqueous solution in step (1).

The optimal contact time of the fibres with the imbibing solution in step (1) at 15°—45°C. will generally vary between 10 seconds and 2 hours, depending on various factors such as the metal salt concentration in the imbibing solution, the particular metal salts involved, the type of fibre, whether or not pre-swelling is employed and the like.

The organic polymer fibres employed in step (2) can be of a broad variety of available types of polymer fibres with the proviso that the selected fibres must be capable of swelling and absorbing the aqueous solution of step (1), and further that the fibres do not melt when heated.

Suitable types of fibres are those composed of natural or synthetic polymers such as cellulosics (e.g. cotton or rayon), wool, silk, polyacrylics (e.g. polyacrylonitrile), polyesters (e.g. polyethylene terephthalate), polyamides (e.g. nylon 6,6), polyurethanes, polyimidazoles and the like.

After the imbibed fibres have been recovered from the procedure of step (2), they are contacted with an alkaline aqueous solution in step (3) to convert the imbibed metal salt compounds to the corresponding metal hydroxides which precipitate out of solution within the internal structure of the fibre.

In a typical operation, the fibres are submerged in an aqueous bath which has a pH above 8.5 for a period of time sufficient to achieve the precipitation of metal hydroxides inside the fibre substrate. The contact period of the fibres with the alkaline aqueous medium will generally vary in the range 0.1—1 hour, until the precipitation of metal hydroxides is completed.

Suitable basic reagents for providing alkalinity in the aqueous medium include alkali metal hydroxides such as sodium hydroxide and potassium hydroxide, and other basic reagents such as alkali metal carbonates and phosphates.

After the alkaline medium treatment of the fibres has been completed, it is desirable to remove the residual alkaline solution which adheres to the surfaces of the fibres, so as to prevent bonding together of fibres by caked salt. The excess alkaline solution can be removed by washing the fibres with water, by blotting with absorbent paper or cloth, by centrifugation or vacuum filtration, or by various combinations of these methods.

Preferably the fibres are then thoroughly dried, such as by air drying or by exposing the fibres to a stream of warm gas.

The pyrolysis step of the process is preferably conducted at a temperature of 600°C—1800°C in the presence of molecular oxygen for a period of 0.3—5 hours sufficient to provide ferrimagnetic spinel fibres substantially free of carbon content.

The present invention also provides ferrimagnetic spinel fibres comprising crystallites of ferrite spinel corresponding to the formula $M_1Fe_2O_4$, where M is divalent metal and wherein the average particle size of the ferrite spinel crystallites is less than 1000 Angstroms (100 nm).

In a more particular embodiment, the present invention provides ferrimagnetic spinel fibres comprising crystallites of ferrite spinel corresponding to the formula $M_1Fe_2O_4$, where M is manganese, iron, cobalt, nickel, copper, zinc, cadmium, magnesium, barium, strontium or any combination thereof; and wherein the average particle size of the ferrite spinel crystallites is less than 1000 Angstroms (100 nm).

Under optimal conditions, the practice of the present invention provides ferrimagnetic spinel fibres which are strong and flexible. When woven into the form of a fabric, the ferrimagnetic spinel fibre product is particularly suitable for electromagnetic interaction shielding.

The following Example illustrates the present invention. The specific ingredients and processing parameters are presented as being typical, and various modifications can be made in accordance with the foregoing disclosure within the scope of the invention.

Example

A.

A 320 gram quantity of polyacrylonitrile polymer (PAN, number average molecular weight of 100,000) is dissolved in 1680 grams of dimethylacetamide (DMAC) solvent to yield a 16% by weight dope of PAN/DMAC.

The spin bath employed for coagulation during fibre formation is a 70/30 by volume mixture of methanol and dimethylacetamide.

B.

A metal chloride dip bath is prepared by mixing the following:

| | | |
|---|---|---|
| 1572 g | $FeCl_3 \cdot 6H_2O$ | (Fisher lump grade) |
| 483 g | $NiCl_2 \cdot 6H_2O$ | (Fisher) |
| 120 g | $ZnCl_2$ | (MCB) |
| 600 g (500 ml) | concentrated HCl | (12 molar) |

The mixture is diluted to 4 litres with distilled water, and stirred until all the solids are dissolved to form a dark brown solution.

The solution contains the following metal ion content:

| | | |
|---|---|---|
| $[Fe^{3+}]$ | : 1.454 M, | 6.44% |
| $[Ni^{2+}]$ | : 0.508 M, | 2.37% |
| $[Zn^{2+}]$ | : 0.220 M, | 1.14% |
| | | 9.95% by weight |

$[Fe^{3+}]/[Ni^{2+}]/[Zn^{2+}]=2.000/0.699/0.303$

C.

An aqueous alkaline solution is prepared by diluting 323.6 g of 50/50 aqueous NaOH stock solution to two litres with distilled water.

The alkaline solution was an [$OH^-$] content of 2.02 M, and a pH of about 14.

D.

The PAN dope is extruded from a spinning jet and is coagulated in the spin bath (70/30 methanol/DMAC). The formed fibre is passed over rollers and into the metal chloride bath. The immersion time is controlled by raising or lowering a teflon dip-stick. In this bath, the PAN fibre swells and is imbibed with the metal chlorides, turning the fibre orange-red.

The fibre is passed into the aqueous sodium hydroxide solution, which causes the precipitation of rust-red metal hydroxides in the fibre. The fibre is passed through a distilled water bath to wash off any sodium chloride product, then over a series of skewed rollers to draw and stretch it. One roller is immersed in a water bath to wash out any residual sodium chloride from the fibres. The resultant red fibre product is picked up on a bobbin. Elemental analysis of this fibre indicates that it is 9.7% by weight iron, 2.7% nickel and 2.0% zinc. Only 71 ppm of sodium and 110 ppm of chlorine are present, confirming that the fibre-washing steps are effective in removing these impurities.

The fibre is then stabilised by heating in air at 265°C. The resultant black fibre is pyrolised at 600°C. in air and then at 1200°C. in oxygen, to yield a black ferrimagnetic fibre. X-ray diffraction analysis indicates that this fiber consists of α-$Fe_2O_3$ and spinel ($M_1Fe_2O_4$) in approximately equivalent amounts. The average particle size in the fibres, as determined by scanning electron microscope measurements, is less than 1000 Angstroms.

**Claims**

1. A process for the production of ferrimagnetic spinel fibres which comprises (1) forming an aqueous solution containing metal salt compounds in quantities and with metal valences that correspond to a spinel product corresponding to the formula:

$$M_1Fe_2O_4$$

where M is divalent metal; (2) contacting the aqueous solution with organic polymer fibres that swell and are imbibed with the metal salts; (3) contacting the imbibed fibres with an alkaline aqueous solution to precipitate the metal salt content of the fibres in the form of metal hydroxides; and (4) pyrolysing the fibres at a temperature of 500°—2500°C. in the presence of molecular oxygen to form ferrimagnetic $M_1Fe_2O_4$ spinel fibres.

2. A process in accordance with claim 1 wherein M is manganese, iron, cobalt, nickel, copper, zinc, cadmium, magnesium, barium, strontium or any combination thereof.

3. A process in accordance with claim 2 wherein the metal salt compounds in step (1) are nickel, zinc and iron salts in a nickel/zinc/iron gram-atom ratio of about 0.7:0.3:2.

4. A process in accordance with any of claims 1—3 wherein the metal salt compounds in step (1) are inorganic acid salt compounds.

5. A process in accordance with any of claims 1—4 wherein the concentration of the metal salt cations in the aqueous solution of step (1) is 2—30 weight percent, based on total solution weight.

6. A process in accordance with any of claims 1—5 wherein the organic polymer fibres in step (2) are natural fibres.

7. A process in accordance with any of claims 1—6 wherein the organic polymer fibres in step (2) are cellulosic fibres.

8. A process in accordance with any of claims 1—6 wherein the organic polymer fibres in step (2) are synthetic fibres.

9. A process in accordance with claim 8 wherein the organic polymer fibres in step (2) are polyacrylic fibres, polyester fibres or polyamide fibres.

10. A process in accordance with any of claims 1—9 wherein the fibres in step (2) are imbibed with 0.2—2 grams of metal salt compounds per gram of organic polymer content.

11. A process in accordance with any of claims 1—10 wherein the alkaline aqueous solution in step (3) is an alkali metal hydroxide solution.

12. A process in accordance with any of claims 1—11 wherein the pyrolysis in step (4) is conducted at a temperature of 600°—1800°C for a period of 0.3—5 hours sufficient to provide ferrimagnetic spinel fibres substantially free of carbon content.

13. A process in accordance with any of claims 1—12 wherein the ferrimagnetic spinel fibres produced in step (4) are composed of $M_1Fe_2O_4$ spinel crystallites having an average particle size less than 1000 Angstroms (100 nm).

14. Ferrimagnetic spinel fibres comprising crystallites of ferrite spinel corresponding to the formula:

$$M_1Fe_2O_4$$

where M is divalent metal, and wherein the average particle size of the ferrite spinel crystallites is less than 1000 Angstroms (100 nm).

15. Ferrimagnetic spinel fibres in accordance with claim 14 wherein M is manganese, iron, cobalt, nickel, copper, zinc, cadmium, magnesium, barium, strontium or any combination thereof.

16. Ferrimagnetic spinel fibres in accordance with claim 15 wherein M is nickel, zinc or a combination thereof.

17. Ferrimagnetic spinel fibres in accordance with claim 16 wherein the gram-atom ratio of nickel/zinc/iron is about 0.7:0.3:2.

**Patentansprüche**

1. Verfahren zur Herstellung ferrimagnetischer Spinell-Fasern, umfassend

(1) das Bilden einer wäßrigen Lösung, die Metallsalz-Verbindungen in Mengen und mit Metall-Valenzen enthält, die einem Spinell-Produkt der Formel

$$M_1Fe_2O_4$$

entsprechen, in der M ein zweiwertiges Metall ist,

(2) das In-Kontakt-Bringen der wäßrigen Lösung mit organischen Polymer-Fasern, die quellen und mit den Metallsalzen getränkt werden,

(3) das In-Kontakt-Bringen der getränkten Fasern mit einer alkalischen wäßrigen Lösung zur Ausfällung des Metallsalz-Gehaltes der Fasern in Form von Metallhydroxiden, und

(4) das Pyrolysieren der Fasern bei einer Temperatur von 500°C bis 2500°C in Gegenwart von molekularem Sauerstoff unter Bildung ferrimagnetischer $M_1Fe_2O_4$-Spinell-Fasern.

2. Verfahren nach Anspruch 1, worin M Mangan, Eisen, Cobalt, Nickel, Kupfer, Zink, Cadmium, Magnesium, Barium, Strontium oder eine beliebige Kombination derselben ist.

3. Verfahren nach Anspruch 2, worin die Metallsalz-Verbindungen in Schritt (1) Nickel-, Zink- und Eisen-Salze in einem Gramm-Atom-Verhältnis Nickel/Zink/Eisen von etwa 0,7:0,3:2 sind.

4. Verfahren nach irgendeinem der Ansprüche 1 bis 3, worin die Metallsalz-Verbindungen in Schritt (1) Salz-Verbindungen anorganischer Säuren sind.

5. Verfahren nach irgendeinem der Ansprüche 1 bis 4, worin die Konzentration der Metallsalz-Kationen in der wäßrigen Lösung von Schritt (1) 2 bis 30 Gew.-%, bezogen auf das Gesamtgewicht der Lösung, beträgt.

6. Verfahren nach irgendeinem der Ansprüche 1 bis 5, worin die organischen Polymer-Fasern in Schritt (2) Naturfasern sind.

7. Verfahren nach irgendeinem der Ansprüche 1 bis 6, worin die organischen Polymer-Fasern in Schritt (2) Cellulose-Fasern sind.

8. Verfahren nach irgendeinem der Ansprüche 1 bis 6, worin die organischen Polymer-Fasern in Schritt (2) synthetische Fasern sind.

9. Verfahren nach Anspruch 8, worin die organischen Polymer-Fasern in Schritt (2) Polyacryl-Fasern, Polyester-Fasern oder Polyamid-Fasern sind.

10. Verfahren nach irgendeinem der Ansprüche 1 bis 9, worin die Fasern in Schritt (2) mit 0,2 bis 2 g der Metallsalz-Verbindungen pro 1 g des Gehalts an organischem Polymer getränkt werden.

11. Verfahren nach irgendeinem der Ansprüche 1 bis 10, worin die alkalische wäßrige Lösung in Schritt (3) eine Alkalimetallhydroxid-Lösung ist.

12. Verfahren nach irgendeinem der Ansprüche 1 bis 11, worin die Pyrolyse in Schritt (4) bei einer Temperatur von 600°C bis 1800°C über einen Zeitraum von 0,3 bis 5 h durchgeführt wird, der für die Erzeugung ferrimagnetischer Spinell-Fasern ausreicht, die im wesentlichen frei von einen Gehalt an Kohlenstoff sind.

13. Verfahren nach irgendeinem der Ansprüche 1 bis 12, worin die in Schritt (4) erzeugten ferrimagnetischen Spinell-Fasern aus $M_1Fe_2O_4$-Spinell-Kristalliten mit einer mittleren Teilchen-Größe von weniger als 1000 Å (100 nm) aufgebaut sind.

14. Ferrimagnetische Spinell-Fasern, umfassend Kristallite aus Ferrit-Spinell der Formel

$$M_1Fe_2O_4$$

entsprechen, in der M ein zweiwertiges Metall ist, und worin die mittlere Teilchen-Größe der Ferrit-Spinell-Kristallite weniger als 1000 Å (100 nm) beträgt.

15. Ferrimagnetische Spinell-Fasern nach Anspruch 14, worin M Mangan, Eisen, Cobalt, Nickel, Kupfer, Zink, Cadmium, Magnesium, Barium, Strontium oder eine beliebige Kombination derselben ist.

16. Ferrimagnetische Spinell-Fasern nach Anspruch 15, worin M Nickel, Zink oder eine Kombination derselben ist.

17. Ferrimagnetische Spinell-Fasern nach Anspruch 16, worin das Gramm-Atom-Verhältnis Nickel/Zink/Eisen etwa 0,7:0,3:2 beträgt.

**Revendications**

1. Procédé pour la production de fibres de spinelle ferrimagnétique qui comprend (1) la formation d'une solution aqueuse contenant des composés de sel métallique en des quantités et avec des valences métalliques qui correspondent à un produit de spinelle correspondant à la formule:

$$M_1Fe_2O_4$$

dans laquelle M est un métal divalent; (2) la mise en contact de la solution aqueuse avec des fibres de polymère organique qui gonflent et qui sont imbibées des sels métalliques; (3) la mise en contact des fibres imbibées avec une solution aqueuse alcaline pour précipiter le contenu de sel métallique des fibres sous forme d'hydroxydes métalliques; et (4) la pyrolyse des fibres à une température de 500—2500°C en présence d'oxygène moléculaire pour former des fibres de spinelle ferrimagnétique $M_1Fe_2O_4$.

2. Procédé selon la revendication 1, dans lequel M est le manganèse, le fer, le cobalt, le nickel, le cuivre, le zinc, le cadmium, le magnésium, le baryum, le strontium, ou toute combinaison de ceux-ci.

3. Procédé selon la revendication 2, dans lequel les composés de sel métallique de l'étape (1) sont des sels de nickel, de zinc et de fer dans un rapport d'atome-gramme de nickel/zinc/fer d'environ 0,7:0,3:2.

4. Procédé selon l'une des revendications 1 à 3, dans lequel les composés de sel métallique à

l'étape (1) sont des composés de sel d'acide minéral.

5. Procédé selon l'une des revendications 1 à 4, dans lequel la concentration des cations de sel métallique dans la solution aqueuse de l'étape (1) est de 2 à 30% en poids, sur la base du poids total de la solution.

6. Procédé selon l'une des revendications 1 à 5, dans lequel les fibres de polymère organique de l'étape (2) sont des fibres naturelles.

7. Procédé selon l'une des revendications 1 à 6, dans lequel les fibres de polymère organique à l'étape (2) sont des fibres cellulosiques.

8. Procédé selon l'une des revendications 1 à 6, dans lequel les fibres de polymère organique à l'étape (2) sont des fibres synthétiques.

9. Procédé selon la revendication 8, dans lequel les fibres de polymère organique à l'étape (2) sont des fibres polyacryliques, des fibres de polyester ou des fibres de polyamide.

10. Procédé selon l'une des revendications 1 à 9, dans lequel les fibres à l'étape (2) sont imbibées par 0,2 à 2 grammes de composés de sel métallique par gramme de contenu de polymère organique.

11. Procédé selon l'une des revendications 1 à 10, dans lequel la solution aqueuse alcaline à l'étape (3) est une solution d'hydroxyde de métal alcalin.

12. Procédé selon l'une des revendications 1 à 11, dans lequel le pyrolyse de l'étape (4) est réalisée à une température de 600 à 1800°C pendant une période de 0,3 à 5 heures, suffisante pour fournir des fibres de spinelle ferrimagnétique sensiblement dépourvues de teneur en carbone.

13. Procédé selon l'une des revendications 1 à 12, dans lequel les fibres de spinelle ferrimagnétique produites à l'étape (4) sont composées de cristallites de spinelle $M_1Fe_2O_4$ ayant une taille moyenne de particules inférieure à 1000 Angstroms (100 nm).

14. Fibres de spinelle ferrimagnétique comprenant des cristallites de spinelle de ferrite correspondant à la formule:

$$M_1Fe_2O_4$$

dans laquelle M est un métal divalent, et dans lesquelles la taille moyenne de particules des cristallites de spinelle de ferrite est inférieur à 1000 Angstroms (100 nm).

15. Fibres de spinelle ferrimagnétique selon la revendication 14, dans lesquelles M est le manganèse, le fer, le cobalt, le nickel, le cuivre, le zinc, le cadmium, le magnésium, le baryum, le strontium ou toute combinaison de ceux-ci.

16. Fibres de spinelle ferrimagnétique selon la revendication 15, dans lesquelles M est le nickel, le zinc, ou une combinaison de ceux-ci.

17. Fibres de spinelle ferrimagnétique selon la revendications 16, dans lesquelles le rapport d'atome-gramme de nickel/zinc/fer est d'environ 0,7:0,3:2.